# EUROPEAN PATENT SPECIFICATION

(11) **EP 1 555 274 B1**
(45) Date of publication and mention of the grant of the patent: **14.08.2013**
(21) Application number: 05000850.7
(22) Date of filing: 17.01.2005
(51) Int. Cl.: C08F 290/04, C08F 290/12, C09B 67/00, C09D 17/00, C09D 155/00, C09D 7/02, C08F 8/44

(54) **Graft copolymers, their production process , emulsions and pigment dispersions using these graft copolymers**
Pfropfcopolymere, Verfahren zur ihrer Herstellung und Pigmentdispersionen mit diesen Pfropfcopolymeren
Copolymères greffés, leur procédé de production et dispersions de pigments utilisant ces polymères greffés

(30) Priority: 19.01.2004 JP 2004010335
(43) Date of publication of application: 20.07.2005
(73) Proprietor: Dainichiseika Color & Chemicals Mfg. Co., Ltd., Chuo-ku Tokyo 103-8383 (JP)
(72) Inventor: Shimanaka, Hiroyuki, Chuo-ku Tokyo 103-8383 (JP); Sakai, Naoyuki, Chuo-ku Tokyo 103-8383 (JP); Koiso, Hideyuki, Chuo-ku Tokyo 103-8383 (JP); Nakamura, Michiei, Chuo-ku Tokyo 103-8383 (JP)
(74) Representative: Blodig, Wolfgang

(56) References cited:
- US-A- 5 231 131
- US-A- 5 770 648
- US-A1- 2002 019 472
- US-A1- 2003 125 488

## Description

### Technical Field

This invention relates to graft copolymers, their production process and their applications, and more specifically to an ink-jet ink comprising a pigment dispersion comprising an inorganic pigment or an organic pigment dispersed in an aqueous medium while using as a dispersant a graft copolymer or emulsion.

### Background Art

Aqueous graft copolymer pigment dispersants are known from US-A 5,231,131.

In regard to graft copolymers, a variety of synthesis processes are known to date, and they have found a wide variety of applications. These applications include an application as pigment dispersants. For example, there are known graft copolymers each having graft chains which are equipped with a pigment-dispersing function (JP-A-9-241565), and also, graft copolymers each formed using, as one of monomers, a macromonomer composed of an aromatic monomer and a carboxyl-containing monomer (JP-A-2002-336672). In addition, emulsions or aqueous dispersions each of which makes use of a water-soluble polymer, for example, a water-soluble resin such as carboxyl-containing styrene-acrylic resin as a protective colloid have been developed (JP-A-4-53802).

In JP-A-9-241565, the graft chains of each graft copolymer are hydrophobic and hence, adsorb on pigment particles, while the backbone of the graft copolymer has hydrophilicity. The pigment particles are, therefore, allowed to disperse in an aqueous medium to provide a pigment dispersion. For the production of the pigment dispersion, however, an irksome production method is required such as kneading the pigment and dispersant while making combined use of a solvent.

Turning next to JP-A-2002-336672, aromatic groups in each graft copolymer exist on graft chains. These aromatic groups have high hydrophobicity, and moreover, the softening point of the graft copolymer is high. The graft copolymer, therefore, has high cohesiveness and rigidity at room temperature, so that the spreading and dissolution of the graft copolymer into water are not considered to be sufficient.

According to JP-A-4-53802, each emulsion or aqueous dispersion is produced using as a protective colloid a water-soluble resin such as a carboxyl-containing styrene-acrylic resin. Because the resin used as the protective colloid is a resin having a relatively low molecular weight of from 5,000 to 10,000 in terms of number average molecular weight, this low molecular weight resin provides the resulting coating with reduced physical properties. The emulsion or aqueous dispersion is, therefore, by no means satisfactory.

### Disclosure of the Invention

The above-described problems can be overcome by the present invention.

In one aspect of the present invention, there is thus provided an ink-jet ink comprising a pigment dispersion comprising an inorganic pigment or organic pigment dispersed in an aqueous medium while using as a dispersant a graft copolymer or emulsion wherein the graft copolymer is formed by copolymerization of (A) a macromonomer and (B) a monomer, wherein the macromonomer (A) is a polymer of (a) an ester monomer between an addition-polymerizable, unsaturated carboxylic acid and an aliphatic alcohol and (b) an addition-polymerizable monomer having an acidic group, said polymer containing an addition-polymerizable group at an end thereof and having an acid value of from 100 to 300; the monomer (B) is an addition-polymerizable monomer; and units of the macromonomer (A) amount to from 20 to 50 wt.% of the whole graft copolymer, and units of the monomer (B) amount to from 50 to 80 wt.% of the whole graft copolymer, and when the total amount of the monomer (B) is assumed to be 100 wt. %, the monomer (B) can preferably comprise at least (c) from 30 to 99. 5 wt. % of a hydrophobic monomer and (b) from 0.5 to 20 wt. % of a monomer having an acidic group; a backbone formed of the monomer (B) has an acid value of from 3 to 130; and an entire acid value of the graft copolymer, including an acid value derived from the macromonomer, is from 55 to 170, as further defined by claim 1.

It is preferred that the macromonomer has a number average molecular weight of from 1,000 to 30, 000 and contains no aromatic ring.

The acidic group can be, for example, a carboxyl group, a sulfonic group and/or a phosphoric group.

The ester monomer (a) can be, for example, an ester between at least one monomer selected from the group consisting of acrylic acid, methacrylic acid, crotonic acid, maleic acid, fumaric acid and itaconic acid and a C₁₋₃₀ aliphatic alcohol or C₆₋₃₀ alicyclic alcohol.

The monomer (b) which has the acidic group is at least one monomer selected from the group consisting of acrylic acid, methacrylic acid, crotonic acid, maleic acid, fumaric acid, itaconic acid, mono(2-methacroyloxyethyl) phthalate, mono(2-methacroyloxyethyl) succinate, vinylsulfonic acid, styrenesulfonic acid, (meth)acrylamidodimethylpropanesulfonic acid, 2-(meth)acroyloxyethylsulfonic acid and mono(2-methacroyloxyethyl)acid phosphate.

Preferably, acidic groups have been neutralized with an alkaline substance.

A process for producing a graft copolymer by copolymerization of (A) a macromonomer and (B) a monomer, wherein the macromonomer (A) is a polymer of (a) an ester monomer between an addition-polymerizable, unsaturated carboxylic acid and an aliphatic alcohol and (b) anaddition-polymerizable monomer having an acidic group, said polymer containing an addition-polymerizable group at an end thereof and having an acid value of from 100 to 300; the monomer (B) is an addition-polymerizable monomer; the macromonomer (A) amounts to from 20 to 50 wt.% of the whole graft copolymer, and the monomer (B) amounts to from 50 to 80 wt.% of the whole graft copolymer; and at least some of acidic groups of the resulting graft copolymer are neutralized with an alkaline substance is also disclosed.

A method for producing an emulsion, which comprises subjecting a monomer, which is composed primarily of a hydrophobic monomer, to emulsion polymerization in the presence of the graft copolymer the acidic groups of which have been neutralized with the alkaline substance is also disclosed.

In the graft copolymer used in the present invention, the macromonomer is grafted on the backbone of the graft copolymer. Assuming that in the macromonomer, its carbon skeleton makes up its backbone, the graft copolymer can be provided with a lower softening point by forming the side chains of the macromonomer with an carboxylate ester of an aliphatic (including "alicyclic"; this will apply equally hereinafter) alcohol. When the graft copolymer is used as a dispersant for a pigment, the graft copolymer also exhibits low cohesiveness in water and the graft copolymer has flexibility. By neutralizing the acidic groups contained in the graft copolymer, the graft copolymer is provided with very high hydrophilicity so that the graft copolymer is increased in its solubility and spreadability into water. When the pigment is dispersed in an aqueous medium by using the graft copolymer, the macromonomer units show high compatibility with water. As a consequence, the dispersed pigment is provided with improved dispersion stability and the backbone (the carbon chain composed of the monomer) of the graft copolymer adsorbs on particles of the pigment with high compatibility with the pigment, thereby making it possible to obtain a good pigment dispersion. This pigment dispersion is useful as a colorant in paints, inks and stationery inks.

It has also been found that the graft copolymer obtained by either completely or partially neutralizing the graft copolymer according to the present invention, its aqueous dispersion or its emulsion, and an emulsion obtained by using the graft copolymer of the present invention as a protective colloid can each be used as a good coating-forming component upon formation of a coating and are each useful as a material for paints, inks, coating compositions, adhesives and stationery inks. These findings have led to the present invention.

### Best Modes for Carrying out the Invention

The present invention will hereinafter be described in further detail based on preferred embodiments of the present invention.

The term "macromonomer" as used herein means a monomer of a relatively high molecular weight, which is a polymer-type monomer with an addition-polymerizable, double bond group (α,β-ethylenically unsaturated group) bonded to one end thereof. By incorporating this macromonomer in a graft copolymer, graft chains derived from the macromonomer can be introduced into the graft copolymer.

The graft copolymer used in the present invention is a graft copolymer formed by copolymerization of the macromonomer (A) and the monomer (B). The macromonomer (A) is a polymer of (a) an ester monomer between an addition-polymerizable, unsaturated carboxylic acid and an aliphatic alcohol and (b) an addition-polymerizable monomer having an acidic group, the polymer contains an addition-polymerizable group at an end thereof and has an acid value of from 100 to 300, the monomer (B) is an addition-polymerizable monomer,units of the macromonomer (A) amount to from 20 to 50 wt.% of the whole graft copolymer, units of the monomer (B) amount to from 50 to 80 wt.% of the whole graft copolymer, and, when the total amount of the monomer (B) is assumed to be 100 wt.%, the monomer (B) comprises at least (c) from 30 to 99.5 wt.% of a hydrophobic monomer and (b) from 0.5 to 20 wt.% of a monomer having an acidic group.

Owing to the use of the ester monomer (a) as one of the constituents of the macromonomer, the resulting graft copolymer can be provided with a lower softening point although the graft copolymer is hydrophobic, and further, the graft copolymer also exhibits flexibility and low cohesiveness in water. When the other copolymerized monomer (b) is neutralized with an alkaline substance, the overall hydrophilicity of the graft copolymer is increased so that the graft copolymer is provided with improved solubility and spreadability into water.

The ester monomer (a) can preferably be an ester between at least one monomer selected from the group consisting of acrylic acid, methacrylic acid, crotonic acid, maleic acid, fumaric acid and itaconic acid and a C₁₋₃₀ aliphatic alcohol or C₆₋₃₀ alicyclic alcohol. The aliphatic alcohol can be a C₁₋₁₈, more preferably C₁₋₁₂ alcohol or a liquid, branched C₁₃₋₁₈ alcohol. As the alicyclic alcohol, on the other hand, a C₆₋₁₈ alcohol is preferred. If the aliphatic alcohol has a large carbon number and is in the form of a linear chain, for example, is stearyl alcohol, the crystallizability of its carbon chain is exhibited, thereby making it difficult to provide the graft copolymer of the present invention with low cohesiveness. As the monomer (a), a conventionally-known monomer can be used specifically. It is possible to use, for example, at least one of the methyl, ethyl, propyl, isopropyl, butyl, pentyl, hexylcyclohexyl, methylcyclohexyl, ethylcyclohexyl, 2-ethylhexyl, decyl, isodecyl, octadecyl, isostearyl, isoboronyl and like esters of (meth)acrylic acid.

Next, the monomer (b) is at least one monomer selected from (meth)acrylic acid, itaconic acid, maleic acid, fumaric acid, crotonic acid, mono(2-methacrolyloxyethyl) phthalate, mono (2-methacrolyloxyethyl) succinate, itaconic acid, maleic acid, fumaric acid, (meth)acrylamidodimethylpropane sulfonic acid, vinylsulfonic acid, styrenesulfonic acid, (2-(meth)acroyloxyethyl)sulfonic acid, and mono(2-methacroyloxyethyl)acid phosphate. In the present invention, (meth) acrylic acid and its hydrophilic derivatives are preferred for their good polymerizability.

The monomer (b) is used in an amount sufficient to provide the graft copolymer of the present invention with water-compatibility. The hydrophilicity of the graft copolymer according to the present invention is considerably affected by the acid value of the macromonomer itself and the amount of the macromonomer introduced into the graft copolymer. To provide the macromonomer-introduced graft copolymer with sufficient water-compatibility and, when a pigment is subjected to dispersion processing, to maintain particles of the pigment sufficiently stable in water, the acid value of the macromonomer is from 100 to 300, preferably from 150 to 250. An acid value smaller than 100 requires the introduction of more macromonomer units into the graft copolymer for the stabilization of the graft copolymer and pigment particles in water, so that the properties of the macromonomer are exhibited strongly in the graft copolymer. For the copolymerizability between the macromonomer (A) and the monomer (B), there is such an inconvenience that a portion of the macromonomer does not react and remains in the polymerization system. An acid value greater than 300, on the other hand, can reduce the amount of the macromonomer introduced in the resulting graft copolymer, but the proportion of macromonomer units in the graft copolymer correspondingly becomes smaller so that the effects of the properties of the backbone of the graft copolymer are exhibited. As a consequence, cohesiveness is observed on the graft copolymer, and in some instances, the graft copolymer may not be preferred as a dispersant for pigments. In addition, the hydrophilicity is so high that products making use of the present invention are poor in waterproofness.

In the present invention, the acid value derived from the macromonomer introduced in the graft copolymer may preferably range from 50 to 120 in the whole graft copolymer. If the acid value derived from the macromonomer is smaller than 50, the resulting graft copolymer cannot be provided with sufficient compatibility with water. If the acid value derived from the macromonomer is greater than 120, the resulting graft copolymer is provided with excessively high water solubility so that, when added to various materials and formed into coatings, a problem arises in that the coatings are inferior in waterproofness. The more preferred acid value of the graft copolymer is from 60 to 100.

In view of the above-described acid value of the macromonomer (A) itself, the desired acid value of the graft copolymer and the polymerizability of the macromonomer, the amount of the macromonomer (A) introduced in the graft copolymer according to the present invention is from 20 to 50 wt.% when the total amount of the graft copolymer is assumed to be 100 wt.%. An amount smaller than 20 wt.% may not be able to provide the graft chains, which are formed of the macromonomer, with sufficient hydrophilicity, while an amount greater than 50 wt.% involves a potential problem that a portion of the macromonomer may remain as an unreacted material in the polymerization system.

No particular limitation is imposed on the molecular weight of the macromonomer. However, an unduly high molecular weight leads to poor polymerizability and also to the introduction of a smaller number of macromonomer molecules into the graft copolymer so that the graft copolymer may be unable to exhibit sufficient hydrophilicity. The macromonomer, therefore, has to be introduced evenly in the graft copolymer. Therefore, its molecular weight may be preferably from 1,000 to 30,000, more preferably from 2,000 to 10, 000, still more preferably from 3, 000 to 7, 000 in terms of number average molecular weight.

The macromonomer (A) can be obtained by a conventionally-known process, and no particular limitation is imposed on its production process. As a synthesis process, the macromonomer can be obtained, for example by polymerizing the monomer (a) in the presence of a hydroxyl-containing, chain transfer agent such as 2-hydroxyethylthiol to obtain a polymer with a hydroxyl group introduced at one end thereof and then reacting a monomer, which has a reactive group capable of reacting with active hydrogen such as methacrylic acid chloride or methacryloyloxyethyl isocyanate, with a monomer having a reactive group. The macromonomer (A) can also be obtained by introducing an active-hydrogen-containing group such as a hydroxyl group to an end of a polymer, which has been obtained by ionic polymerization or living radical polymerization, and then reacting it with a compound having a reactive group capable of reacting the above-described active hydrogen and also an addition-polymerizable, reactive group. The macromonomer (A) can also be obtained by conducting radical polymerization at high temperature and high pressure and then conducting depolymerization or the like.

A description will next be made about the monomer (B) which is copolymerized with the above-described macromonomer (A). The monomer (B) serves to form the backbone of the graft copolymer. Conventionally-known, various, addition-polymerizable, unsaturated monomers are each usable. When the total amount of the graft copolymer is assumed to be 100 wt.%, the amount of the monomer (B) is the remainder of the amount of the macromonomer, that is, from 50 to 80 wt. %.

As the monomer (B), in the present invention a monomer which comprises at least the monomer (c) and the monomer (b) is used. The use of a monomer that can impart high pigment compatibility and pigment dispersibility as units of the monomer (c) when the monomer (c) is formed into the graft copolymer makes it possible to provide the graft copolymer with good pigment dispersibility. Described specifically, the above-described monomer (a) can be used as the monomer (c), and a monomer having an aromatic ring or a monomer having a polar group can also be used as the monomer (c). Examples of the monomer having an aromatic ring include the benzyl, phenyl and naphthyl esters of (meth)acrylic acid, styrene,α-methylstyrene, and vinylnaphthalene. On the other hand, examples of the monomer having a polar group include the hydroxypropyl, 4-hydroxybutyl, dimethylaminoethyl and diethylaminoethyl esters of (meth) acrylic acid. One or more of these compounds can be used as the monomer (c) . The amount of the monomer (c) is the remainder or less of the monomer (b) and, when the total amount of all monomers in the monomer (B) is assumed to be 100 wt.%, is from 30 to 99.5 wt.%.

In the present invention, it is preferred that the backbone of the graft copolymer is not completely hydrophobic but is provided with some hydrophilicity. Some hydrophilicity can be imparted to the backbone of the graft copolymer by introducing a hydrophilic monomer, which contains an acidic group, to some extent into the backbone of the graft copolymer and then neutralizing it into a salt. Described specifically, one or more of the above-exemplified compounds of the monomer (b), which contains the acidic group, can be used. When the total amount of all the monomers in the monomer (B) is assumed to be 100 wt.%, the amount of the hydrophilic monomer is from 0. 5 to 20 wt. %, more preferably from 1 to 15 wt.%, still more preferably from 2 to 10 wt.%.

If the backbone of the graft copolymer does not contain any units of a monomer having an acidic group or contains them in an amount smaller than 0.5 wt. %, the cohesion of the backbone does not loosen or disentangle in a water system when the backbone is not equipped with any hydrophilicity, although this depends upon the softening point of the backbone and the composition of a solvent upon dispersing the graft copolymer. If this is the case, the backbone may not be able to sufficiently adsorb a pigment thereon, thereby possibly failing to disperse the pigment. It is, however, to be noted that, even when the backbone has no acid value, a dispersion for use in the present invention can still be sufficiently formed provided that a solvent capable of dissolving the graft copolymer, including the backbone, is used either singly or in combination with water in the dispersingprocessing of the graft copolymer. If the units of the monomer having the acidic group amount more than 20 wt.% in the backbone, the hydrophilicity of the backbone always increases, in other words, the acid value of the backbone always becomes excessively large in the resulting dispersion. Therefore, the hydrophilicity of the backbone becomes high so that the adsorption of backbone on the pigment is poor and the dispersion of the pigment is not good.

The acid value of the backbone formed by the copolymerization of the monomer (b) with the monomer (c) can be preferably from 3 to 130, more preferably from 5 to 100, still more preferably from 10 to 50. An acid value smaller than 3 provides the backbone with excessively low hydrophilicity, so that the backbone coheres.and does not disentangle, the graft copolymer hardly adheres on the surfaces of the pigment and the pigment is not provided with good dispersibility. An acid value greater than 130, on the other hand, provides the backbone with excessively high hydrophilicity, so that the hydrophobicity of the backbone is lowered, the graft copolymer hardly adheres on the surfaces of the pigment, and the dispersion stability of the resulting pigment dispersion is adversely affected.

As appreciated from the foregoing, the monomer (B) is required to contain at least the monomers (c) and (b). In addition, a copolymerizable monomer containing an addition-polymerizable double bond can also be introduced as needed. As this additional monomer (hereinafter designated by "d"), a conventionally-known monomer is used. Examples of the monomer (d) include, but are not limited specifically to, the vinyl esters of fatty acids, olefinic monomers, halogenated vinyl monomers, and (meth)acrylate esters and maleate esters other than those described in the above. When the total amount of the monomer (B) is assumed to be 100 wt. %, the amount of the monomer (d) can be from 0 to 59.5 wt.%.

As mentioned above, the graft copolymer for use in the present invention is characterized in that it is a copolymer between from 20 to 50 wt.% based on the graft copolymer of the macromonomer (A) and from 50 to 80 wt.% based on the graft copolymer of the monomer (B) and the macromonomer (A) is a copolymer between the monomer (a) and the monomer (b), has an addition-polymerizable group at an end thereof and has an acid value of from 100 to 300. The monomer (B) is composed at least of from 30 to 99.5 wt. % of the hydrophobic monomer (c), from 0.5 to 20 wt.% of the monomer (b) and, if necessary, from 0 to 59.5 wt.% of the monomer (d), and the total acid value of the graft copolymer is from 55 to 170, preferably from 60 to 150, more preferably from 70 to 120. Further, as the preferred breakdown of this total acid value, the acid value of side chains derived from the macromonomer can be from 50 to 120, and the acid value of the backbone composed of the monomer (B) can be from 0.6 to 65.

Concerning the molecular weight of the graft copolymer according to the present invention, its number average molecular weight can preferably be in a range of from 1,000 to 50,000 (GPC, polystyrene calibration). If the molecular weight is lower than 1,000, the graft copolymer can provide pigments with only poor dispersion stability or can form only coatings of poor durability. If the molecular weight is higher than 50, 000, on the other hand, the graft copolymer leads to an aqueous pigment dispersion in which the pigment is not dispersed well. More preferably, the number average molecular weight of the graft copolymer can be from 5,000 to 30,000.

The graft copolymer can be used according to the present invention after neutralizing their acidic groups, although it can be used as is. As an alkaline substance for neutralizing these acidic groups, a conventionally-known alkaline substance can be used such as the hydroxide or carbonate of an alkali metal, ammonia or an amine. Illustrative are lithium hydroxide, sodium hydroxide, potassium hydroxide, sodium carbonate, potassium carbonate, ammonia, morpholine, N-methylmorpholine, trimethylamine, triethylamine, ethanolamine, dietanolamine, triethanolamine, propanolamine, dipropanolamine, tripropanolamine, N-methylethanolamine, N,N-dimethylethanolamine, N-ethylethanolamine, N,N-diethanolamine, N-methyldiethanolamine, N-ethyldiethanolamine, N-methylpropanolamine, N,N-dimethylpropanolamine, and aminomethylpropanol. They can be used either singly or in combination. Particularly preferred are sodium hydroxide, potassium hydroxide and ammonia. By partially or completely neutralizing the acidic groups of the graft copolymer with the alkaline substance, the graft copolymer can be rendered soluble in water or an emulsion or aqueous dispersion of the graft copolymer can be obtained.

The above-described graft copolymer for use in the present invention can be produced by conducting the polymerization of the macromonomer (A) and the monomer (B) in an organic solvent in which these monomers (A) and (B) and the resulting graft copolymer are soluble. The thus-obtained graft copolymer solution can be used as is, that is, as an organic solvent solution, or as described above, water with an alkaline substance dissolved therein can be added as needed to effect neutralization such that the graft copolymer can be obtained as a hydrophilic resin. Further, the organic solvent as the polymerization solvent can be driven off from the neutralized polymerization mixture as needed such that an emulsion or aqueous dispersion of the graft copolymer can be obtained.

Examples of the organic solvent for use in the above-described polymerization include, but not limited specifically to, toluene, xylene, methyl ethyl ketone, ethyl acetate, ethanol, isopropanol, propylene glycol, ethylene glycol monoalkyl ethers (carbon numbers: 1 to 6, this will apply equally to the alkyl groups to be described hereinafter), diethylene glycol monoalkyl ethers, propylene glycol monoalkyl ethers, dipropylene glycol monoalkyl ethers, ethylene glycol dialkyl ethers, diethylene glycol dialkyl ethers, propylene glycol dialkyl ethers, and dipropylene glycol dialkyl ethers.

Especially when the production of a hydrophilic graft copolymer (neutralized product) is desired, the graft copolymer can be rendered soluble in water by neutralizing it with an aqueous alkaline solution while using a water-soluble organic solvent, for example, an alcoholic solvent such as ethanol or isopropanol or a glycol-type solvent such as an ethylene glycol monoalkyl ether, diethylene glycol monoalkyl ether or propylene glycol monomethyl ether.

Further, the graft copolymer can be obtained in the form of an emulsion or an aqueous dispersion by conducting solution polymerization while using the above-described organic solvent, conducting neutralization with the above-described aqueous alkaline solution and then distilling off the solvent. It is a surprising characteristic that the aqueous dispersion of the graft copolymer for use in the present invention is in the form of a liquid which contains the graft copolymer in the form of particles of very small particle size and is clear rather than semi-clear. The particle size of the graft copolymer dispersed in the graft copolymer dispersion obtained by the present invention may range from 15 nm to 50 nm, although the particle size of the graft copolymer in the dispersion medium cannot be indicated in any wholesale manner because it varies depending upon the amount of the macromonomer introduced into the graft copolymer.

The solution polymerization can be conducted with a conventionally-known initiator. Usable examples of the initiator include azobisisobutyronitrile as an azo initiator, benzoyl peroxide as a peroxide initiator, and potassium persulfate as a persulfate initiator. The reaction temperature can be from 30°C to 200°C, with a range of from 50°C to 130°C being preferred.

A description will next be made about the method for obtaining an emulsion by using as a protective colloid the graft copolymer obtained. The emulsion can be obtained by subj ecting a still further monomer to emulsion polymerization in a solution of a hydrophilic resin, which had been obtained by neutralizing with an alkaline substance a graft copolymer obtained by solution polymerization, or in an emulsion or aqueous dispersion obtained by desolvating the solution as needed. The availability of the emulsion in the above-described manner can be attributed to the fact that the graft copolymer acts in a similar manner as conventionally-known protective colloids and imparts emulsion stability to particles of the resulting emulsion-polymerized product containing the still further monomer.

As the method for the production of the emulsion, a conventionally-known method can be applied. For example, a solution of a hydrophilic resin as a graft copolymer according to the present invention or an emulsion of aqueous dispersion obtained by desolvating the solution of the hydrophilic solution is mixed beforehand with or dissolved or dispersed in water to prepare a protective colloid solution.

In the presence of the protective colloid, a monomer is next added to conduct emulsion polymerization. The protective colloid can be used in a proportion of from 10 to 100 wt.% based on the monomer. A proportion smaller than 10 wt. % results in an emulsion having reduced emulsion stability, while a proportion greater than 100 wt.% provides an emulsion having good emulsion stability but results in an excessively large proportion of the protective colloid (graft copolymer) so that, when a coating is formed with the emulsion, the waterproofness of the coating is adversely affected.

As the monomer employed in the above-described emulsion polymerization, a conventionally-known monomer, especially the above-described hydrophobic monomer (c) can be used, and no particular limitation is imposed on the monomer. For the polymerization, a conventionally-known initiator, for example, a water-soluble initiator, specifically potassium persulfate or ammonium persulfate as a persulfate initiator, 2,2'-azobis(2-aminopropane)hydrochloride as an azo initiator, or the like can be used, and no particular limitation is imposed either in this respect. As an alternative, the polymerization can also be conducted by dissolving an oil-soluble initiator beforehand in the monomer. As this oil-soluble initiator, the above-described initiator employed upon synthesizing the graft copolymer can also be used. The thus-obtained emulsion may preferably have a solid content of from 10 to 70 wt.%. Concerning the average particle size of the emulsion particles, a stable emulsion can be obtained with particles of from 30 nm to 3 µm.

Using the graft copolymer as a pigment dispersant, a pigment dispersion can also be obtained. Described specifically, a pigment dispersion can be obtained by mixing and dispersing the graft copolymer and a pigment (an inorganic pigment or organic pigment) and, if necessary, water or a solvent and further, a dispersion aid and then classifying the dispersed pigment particles as needed. Depending upon the graft copolymer selected for use in the above procedure, an organic-solvent-based pigment dispersion or a water-based, i.e., aqueous pigment dispersion can be obtained.

As the pigment for obtaining the pigment dispersion, conventionally-known pigments are each usable. Examples of organic pigments include phthalocyanine pigments, azo pigments, azomethineazo pigments, azomethine pigments, anthraquinone pigments, perinone/perylene pigments, indigo/thioindigo pigments, dioxazine pigments, quinacridone pigments, isoindoline pigments, isoindolinone pigments, and carbon black pigment.

For use in the present invention, it is desired to select a pigment from the above-described pigments by taking into consideration its kind, particle size and processing and/or treatment in light of the application of the pigment dispersion. An organic, fine particulate pigment is desired unless its application requires a hiding power. Especially when transparency or clearness is desired for the resulting colored material or product, it is desired to eliminate particles of the organic pigment having particle sizes of 0. 5 µm and greater such that the average particle size of the organic pigment is controlled to 0.15 µm or smaller.

A description will firstly be made about the aqueous pigment dispersion according to the present invention. The hydrophilic pigment solution obtained by neutralizing the graft copolymer with the aqueous alkaline solution, the emulsion or aqueous dispersion obtained by removing the polymerization solvent form the solution, or an emulsion obtained using the graft copolymer as a protective colloid is used as a pigment dispersant. To obtain the aqueous pigment dispersion, the pigment is treated beforehand with the graft copolymer and the thus-treated pigment is dispersed in water, or as an alternative, the untreated pigment is mixed with water, followed by dispersion processing in a disperser.

A description will be made about the method in which the pigment is treated beforehand with the graft copolymer and the thus-treated pigment is dispersed in water. According to this method, the pigment, the graft copolymer which has been neutralized or has not been neutralized, and water and/or the above-described solvent are mixed together and, if necessary, the resultant mixture is subjected to dispersion processing in a disperser. When the hydrophilicity of a backbone is high, the backbone of the graft copolymer undergoes cohesion if water is used as a sole dispersion medium. The graft copolymer is, therefore, dispersed in such a state that its backbone can be dissolved, for example, in a mixed system making the combined use of a solvent and water. When the graft copolymer has been neutralized, an acid such as sulfuric acid, hydrochloric acid or acetic acid is added to salt out the graft copolymer. When the solvent was used in a large amount, the pigment dispersion can be obtained by inducing phase reversal or the like such that the graft copolymer is caused to sufficiently deposit and adsorb on the surfaces of the pigment particles, conducting filtration, water-washing, drying and grinding to obtain the thus-treated pigment, pouring the treated pigment into alkaline water to effect neutralization, and, if necessary, then subjecting the thus-neutralized pigment to dispersion processing.

The above-described treatment and processing are conducted to enhance the adsorption property of the backbone of the graft copolymer of the present invention on the pigment particles. As the backbone of the graft copolymer is hydrophobic, the backbone of the graft copolymer sufficiently adsorb on the surfaces of the pigment. On the other hand, the graft chains (macromonomer units) of the graft copolymer have strong hydrophilicity and are compatible with an aqueous medium. The graft copolymer, therefore, retains strong pigment adsorptivity and high stability as a whole, and therefore, makes it possible to obtain a good pigment dispersion.

When the pigment, the graft copolymer, and water and/or the solvent are subjected to dispersion processing in a disperser as in the preparation of a conventional pigment dispersion, the graft copolymer and the pigment are premixed as needed, and are then dispersed into a pigment dispersion. This method is useful when the backbone has a rather high acid value and its solubility in water is somewhat observed.

The pigment dispersions obtained by these two methods, respectively, may be used as are, although from the standpoint of heightening the reliability of the pigment dispersions, the elimination of coarse particles which may exist only a little bya centrifuge, ultracentrifuge or filter is preferred.

No particular limitation is imposed on the disperser which can be used in the present invention. Usable examples include a kneader, an attritor making use of glass beads, zirconia beads or the like, a ball mill, a sand mill, a colloidal mill, a continuous, medium-containing, horizontal disperser, a continuous, medium-containing, upright disperser, a vented single-screw or twin-screw extruder, and a three-roll mill.

The concentration of the pigment in the pigment dispersion according to the present invention may be from 0. 5 to 70 wt.%, preferably from 0.5 to 30 wt.% in the case of an organic pigment and from 0.5 to 50 wt.% in the case of an inorganic pigment, although it varies depending upon the kind of the pigment. The amount of the graft copolymer is desirably from 5 to 500 parts by weight per 100 parts by weight of the pigment. The viscosity of the dispersion obtained as described above may be from 1 to 50 mPas, preferably from 2 to 30 mPas at 25°C. It is particularly important that the pigment dispersion according to the present invention is excellent in the stability of viscosity with time.

To the pigment dispersion, various additives can also be added in addition to the pigment, graft copolymer and water. For example, durability or fastness improvers such as ultraviolet absorbers and antioxidants, anti-settling agents, release agents or releasability improvers, fragrances, antimicrobial agents, antimolds, plasticizers, and anti-drying agents can be used. If necessary, surfactants, dispersion aids, pigment treatments, dyes and the like can also be added.

As other methods for obtaining the treated pigment, the graft copolymer is obtained by solution polymerization in an organic solvent, the solvent is removed, the thus-obtained solid graft copolymer and the pigment are kneaded under heat by using one or more of a kneader, a Banbury mixer, a mixing roll and a three-roll mill, and the kneaded mixture is ground or chopped to obtain chips; in a kneader, a solution of the graft copolymer in an organic solvent and a water-containing presscake of the pigment are mixed and are heated to the softening point of the graft copolymer or a temperature higher than the softening point, the pigment is dispersed further through a three-roll mill or extruder as needed, and the resultingmixture is ground or chopped to obtain pigment chips; and a water-containing presscake of a pigment and the solid graft copolymer are subjected to flushing such that they are heated to the softening point of the graft copolymer or a temperature higher than the softening point to remove water. The treated pigment obtained by any one of these methods is characterized in that the graft copolymer sufficiently adsorbs on the surfaces of the pigment particles and provides the pigment with improved dispersibility and stability when formulated into a pigment dispersion.

A pigment dispersion can be obtained by dissolving the treated pigment, which has been obtained as described above, in an organic solvent and, if necessary, adding the graft copolymer further. As the manner of dissolution of the treated pigment into the organic solvent, the treated pigment and the organic solvent are combined together and are mixed under stirring, and, if necessary, the resultingmixture is dispersed in the above-described disperser to obtain a pigment dispersion. The pigment dispersion can then be used as is, or preferably, coarse particles which may exist only a little are removed by a filter such as a centrifuge, ultracentrifuge or microporous filter.

The concentration of the pigment in the pigment dispersion according to the present invention in an ink may be from 0.5 to 50 wt.%, preferably from 0.5 to 30 wt.% and the amount of the graft copolymer is desirably from 5 to 500 parts by weight per 100 parts by weight of the pigment, although these concentration and amount vary depending upon the kind of the pigment. To the dispersion according to the present invention, various additives can also be added. For example, durability or fastness improvers such as ultraviolet absorbers and antioxidants, anti-settling agents, release agents or releasability improvers, fragrances, antimicrobial agents, antimolds, plasticizers, anti-drying agents and the like can also be added. If necessary, dyes can also be added.

By using the graft copolymer as described above, pigment dispersions can be obtained. These pigment dispersions can be used in conventionally-known inks. Described specifically, aqueous pigment dispersions are used as colorants for inkjet inks.

The amount of the graft copolymer of the present invention to be added varies depending upon the application, and cannot be determined in any wholesale manner. Preferably, however, it may be added in an amount of from 3 to 50 wt.%, preferably from 5 to 30 wt.% based on the whole amount.

When the graft copolymer according to the present invention is used as a binder as described above, a conventionally-known crosslinking agent can be additionally used to provide the resulting films with improved various durability, waterproofness and solvent resistance. Useful examples of such a crosslinking agent include, but are not limited specifically to, isocyanate crosslinking agents, carbodiimide crosslinking agents, epoxy crosslinking agents, aziridine crosslinking agents, melamine crosslinking agents, oxazoline crosslinking agents, and acid anhydride crosslinking agents. Based on the solid content of the water-soluble resin, emulsion or aqueous dispersion of the graft copolymer according to the present invention, the crosslinking agent can be used in an amount of from 1 to 50 wt.%, preferably from 3 to 35 wt.%, more preferably from 5 to 30 wt.% in terms of solid. For the above-described applications, it is also possible to use, as an additive or additives, one or more of conventionally-known defoaming agents, preservatives, leveling agents, thickeners, moisture-retaining agents, plasticizers, antioxidants, ultraviolet absorbers, light stabilizers and the like.

### Examples

The present invention will next be described more specifically based on synthesis examples and examples. It should, however, be borne in mind that the present invention is by no means limited by these examples. It is also to be note that all the designations "part" or "part" and "%" in the following examples are on a weight basis.

### Synthesis Example 1

### Synthesis of Graft Copolymer 1

(1) Into a reactor fitted with a stirrer, a reflux condenser, a thermometer, a nitrogen inlet tube and a dropping funnel, diethylene glycol monobutyl ether (100 parts) and isopropyl alcohol (100 parts) were added, followed by heating to 80°C over a water bath. Subsequently, a macromonomer - which had been obtained by reacting methacrylic acid chloride to a polymer formed by copolymerizing a monomer mixture of the composition consisting of methyl methacrylate, butyl acrylate and methacrylic acid at a copolymerization weight ratio of 50:15:35 while using hydroxyethylthiol as a chain transfer agent, contained carboxyl groups, and had an addition-polymerizable double bond at an end thereof - (acid value: 228, number average molecular weight: 3,000, hereinafter abbreviated as "MM-1"; 80 parts) was charged, and the resulting mixture was stirred to dissolve the macromonomer. In a separate vessel, styrene (54 parts), 2-ethylhexyl methacrylate (30parts), hydroxyethylmethacrylate (30 parts) and methacrylic acid (6 parts) were mixed, and azobisisobutyronitrile (AIBN; 5 parts) was dissolved as an initiator. The resulting, mixed monomer solution was then added dropwise into the reaction system over 2 hours. The water bath was controlled to maintain the reaction system at 80°C, and one hour after the completion of the dropwise addition, AIBN (1 part) was added. At the same temperature, polymerization was then conducted for 6 hours.
   After the completion of the polymerization, the polymerization mixture was cooled to 50°C. An aqueous alkaline solution which had been prepared by dissolving potassium hydroxide (22.2 g) in water (77.8 g) was added to the polymerization mixture to effect neutralization, whereby a clear viscous liquid was obtained. The liquid was diluted with water to 20% solid content. The diluted solution remained clear. Upon irradiation of a red laser beamagainst the diluted solution, a path of the laser beam was observed owing to the Tyndall phenomenon, thereby confirming that the produced graft copolymer was in a fine particulate form. The diluted solution was measured for its average particle size by a particle size distribution analyzer. As a result, the average particle size was found to be 25 nm, so that the diluted solution was confirmed to be an aqueous dispersion of a very fine particle size. Further, the graft copolymer was measured for its molecular weight by GPC. As a result, the molecular weight was determined to be 12, 000 in terms of number average molecular weight. The acid value of the graft copolymer was 111 as a whole, the acid value of the macromonomer units in the graft copolymer was 91, and the acid value of the backbone was 20. The aqueous dispersion will hereinafter be called "Graft Copolymer 1".
(2) In a similar manner as in the above procedure (1), a graft copolymer was obtained. Without neutralization with the alkaline solution, however, the graft copolymer was provided as was, namely, as a solution in the organic solvent. This solution will hereinafter be called "Graft Copolymer 2".
(3) An aqueous dispersion of a graft copolymer was obtained in a similar manner as in the above procedure (1) except that the neutralization was effected with 28% aqueous ammonia (25 parts) and water (75 parts). This aqueous dispersion will hereinafter be called "Graft Copolymer 3".

### Synthesis Examples 2-5

### Synthesis of Graft Copolymers 4 to 7

While using hydroxyethylthiol as a chain transfer agent, a monomer mixture of the composition consisting of methyl methacrylate, cyclohexyl acrylate and methacrylic acid at a copolymerization weight ratio of 55:15:30 was copolymerized to afford a polymer. Methacrylic acid chloride was then reacted to the polymer to prepare a macromonomer which contained carboxyl groups and had an addition-polymerizable double bond at an end thereof (acid value: 196, number average molecular weight: 3,500, hereinafter abbreviated as "MM-2").

Graft copolymers 2 to 5 according to the present invention were obtained by conducting polymerization in a similar manner as in Synthesis Example 1 except that the amount of the macromonomer MM-1 or MM-2 and the amounts of the monomers to be reacted with the macromonomer were changed. Their monomer compositions are summarized along with physical properties of the graft copolymers. In the table, the values for the macromonomers and monomers indicate their amounts expressed in terms of "parts". The polymerization mixtures were all obtained as clear viscous liquids. When they were diluted to 20% solid content, the diluted solutions were all looked clear. Upon irradiation of red laser beams against them, however, paths of the laser beams were observed owing to the Tyndall phenomenon, thereby confirming that the graft copolymers were each in a fine particulate form. The graft copolymers were measured for their average particle sizes. As a result, each of the graft copolymers was also confirmed to be in a fine particulate form.

**Table 1**

| Synthesis Example | 2 | 3 | 4 | 5 |
|---|---|---|---|---|
| Graft copolymer | 4 | 5 | 6 | 7 |
| MM-1 | 30 | 35 | - | - |
| MM-2 | - | - | 30 | 40 |
| St | 30 | 35 | 30 | 27.5 |
| 2EHMA | 20 | 15 | 18.5 | 15 |
| HEMA | 15 | 12.5 | 18.5 | 15 |
| MMA | 1.5 | 2.5 | 3 | 2.5 |
| DMAEMA | 3.5 | - | - | - |
| Solvent | Ethanol | Same as in Example 1 | Ethanol | Ethanol, triethylene glycol monobutyl ether |
| Neutralizing agent | KOH | Triethanol-a mine | KOH | KOH |
| Acid value of graft chains | 68 | 80 | 59 | 78 |
| Acid value of backbone | 10 | 16 | 20 | 16 |
| Total acid value | 78 | 96 | 79 | 94 |
| Number average molecular weight | 11,000 | 12,500 | 13,500 | 13,000 |
| Average particle size | 38 nm | 34 nm | 37 nm | 30.2 nm |

In Table 1, the following abbreviations are used. St: styrene, 2EHMA: 2-ethylhexyl methacrylate, HEMA: hydroethyl methacrylate, MMA: methyl methacrylate, DMAEMA: N,N-diethylaminoethyl methacrylate, KOH: potassium hydroxide.

Further, the polymerization mixture of each of Synthesis Examples 2 and 4 was neutralized with the aqueous alkaline solution, and water was added to lower its solid content to 25%. The resulting mixture was heated to subject ethanol and water to azeotropic distillation such that ethanol was distilled off. The solid content of the resulting resin solution was measured, and water was added to adjust the solid content to 40%. Aqueous dispersions obtained as described above will hereinafter be called "Graft Copolymer 8" and "Graft Copolymer 9", respectively.

The polymerization mixture of Synthesis Example 5 was used as was without effecting neutralization with the aqueous alkaline solution, namely, as a solution in the organic solvents. This solution will hereinafter be called "Graft Copolymer 10". Further, the polymerization mixture of Synthesis Example 5 was neutralized with 28% aqueous ammonia and water. This neutralized polymerization mixture will hereinafter be called "Graft Copolymer 11".

### Synthesis Example 6

Using a similar reactor as in Synthesis Example 1, water (40 parts) was added to Graft Copolymer 3 (solid content: 40%; 100 parts), followed by stirring. The thus-prepared mixture was then heated to 75°C, and subsequent to the addition of potassium persulfate (1.8 parts), was left over for 5 minutes. On the side, styrene (30 parts) and butyl acrylate (30 parts) were mixed together in a separate vessel. The resulting mixture was charged in the dropping funnel, and then added dropwise to the first-mentioned mixture over 2 hours. During the dropwise addition, the reaction system was controlled such that exothermic heat was confirmed while 75°C was maintained. The polymerization mixture was then allowed to age for 2 hours, and subsequently, was cooled to afford a white liquid having a slightly-yellow, clear appearance. The white liquid was measured for its average particle size. It was found to be 86 nm. This white liquid will hereinafter be called "the graft copolymer emulsion".

### Referential Example 1

A graft copolymer was obtained by conducting polymerization in a similar manner as in Synthesis Example 1 except for the use of MM-1 (40 parts), styrene (30 parts), 2-ethylhexyl methacrylate (15 parts) and 2-hdyroxyethyl methacrylate (15 parts) . That graft copolymer did not carry acidic groups on the backbone. When the graft copolymer was neutralized with an aqueous solution of KOH, a slightly turbid solution was formed. The slightly turbid solution was then diluted to 10% solid content with water. As a result, the solution turned bluish, semi-transparent white and also turbid. The solution was measured for its average particle size. It was found to be 79 nm. When it was diluted to 20% solid content, the semi-transparent appearance was lost and the solution turned white and turbid.

### Referential Example 2

A graft copolymer was obtained by conducting polymerization in a similar manner as in Synthesis Example 1 except for the use of a macromonomer synthesized by using an aromatic-ring-containing monomer as one of monomers, specifically a macromonomer obtained by reacting methacrylic acid chloride to a polymer which had been formed by copolymerizing a monomer mixture of the composition consisting of styrene, butyl acrylate and methacrylic acid at a copolymerization weight ratio of 40:20:30 while using hydroxyethylthiol as a chain transfer agent (acid value: 196, number average molecular weight: 3,700, hereinafter abbreviated as "MM-3"; 40 parts), styrene (27.5 parts), 2-ethylhexyl methacrylate(15 parts), 2-hydroxyethyl methacrylate (15 parts) and methacrylic acid (2.5 parts). That graft copolymer carried aromatic rings on graft chains. When the graft copolymer was neutralized with an aqueous solution of KOH, a clear viscous liquid was formed. The clear viscous liquidwas then diluted to 20% solid content with water. The diluted solution was semi-transparent with slight turbidity. Upon irradiation of a red laser beam against the diluted solution, a path of the laser beam was observed owing to the Tyndall phenomenon, thereby confirming that the produced graft copolymer was in a fine particulate form. The diluted solution was measured for its average particle size by a particle size distribution analyzer. As a result, the average particle size was found to be 45 nm.

### Example 1

### Application to Inkjet Inks

Water was added to Graft Copolymer 1 of Synthesis Example 1 to afford an aqueous dispersion having 30% solid concentration. The aqueous dispersion (150 parts), ethylene glycol (40 parts) and purified water (160 parts) were mixed thoroughly. With the resulting mixture, a black pigment "Raven 2500 Powder (U) " (trade name, product of Columbia Carbon Co., Ltd.; 150 parts) was mixed under stirring to prepare a mill base. After the mill base was thoroughly dispersed using a medium-containing, horizontal disperser, purified water (250 parts) was added to the mill base to afford a pigment dispersion of 20% pigment content. To the dispersion (100 parts), ethylene glycol (51.0 parts), glycerin (33.0 parts), polyoxyethylene oleate (1 part), a surfactant (0.8 part), an aqueous dispersion (15 parts) of Graft Copolymer 1 of Synthesis Example 1 the solid content of which had been adjusted to 40%, and purified water (197 parts) were added. The resulting mixture was stirred, and was then subjected to centrifugal separation (8, 000 rpm, 20 minutes) to remove coarse particles. Subsequently, filtration was conducted with a membrane filter of 5 µm to afford a black ink.

A yellow ink, cyan ink and magenta ink were also obtained by conducting similar operations as described above. "SEIKA FAST YELLOW A3" (trade name, product of Dainichiseika Color & Chemicals Mfg. Co., Ltd.) was used as a yellow pigment, "CYANINE BLUE KBM" (trade name, product of Dainichiseika Color & Chemicals Mfg. Co., Ltd.) as a blue pigment, and "CHROMOFINE MAGENTA 6887" (trade name, product of Dainichiseika Color & Chemicals Mfg. Co., Ltd.) as a magenta pigment.

Each of the inks obtained in the above was ranked as will be described hereinafter. The ink was filled in an ink cartridge, and by an inkjet printer, solid printing was performed on glossy inkjet paper, "PHOTOLIKE QP" (trade name, product of KONICA CORPORATION). After the print was left over for 1 day in a room, its optical density was measured using "MACBETH RD-914" (trade name, manufactured by Macbeth AG), its chroma was measured using a chromatic meter ("CR-321", trade name, manufactured by Minolta Camera Co., Ltd.), and its 60-deg. gloss was measured using "MICRO-TRI-GLOSS" (trade name, manufactured by BYK-Chemie GmbH). Further, vertical and horizontal lines were printed. The resultant print was visually observed for print definition to rank its print quality. The results of the ranking are shown in Table 2.

**Table 2**

| Inks | | Cyan | Magenta | Yellow | Black |
|---|---|---|---|---|---|
| Quality of printed image | Optical density | 2.55 | 1.92 | 2.04 | 1.81 |
| | Chroma | 60.8 | 76.2 | 90.5 | - |
| | Print definition | A | A | A | A |
| | 60-Deg. gloss | 99 | 105 | 103 | 101 |

| | | | | | |
|---|---|---|---|---|---|
| Ranking in print definition - A: No misalignment, B: Substantially no misalignment, C: Misaligned. | | | | | |

The images printed with the inks making use of Graft Copolymer 1, which images were obtained as described above, were found to have a very high gloss. Similar advantageous effects were also obtained when Graft Copolymer 4, 6, 7 and 8 were individually used in place of Graft Copolymer 1.

### Industrial Applicability

In the graft copolymer according for use in the present invention, the graft chains (macromonomer units) as side chains are formed of the monomer (a). Therefore, the graft copolymer has a low softening point, so that even in water, the graft copolymer has flexibility and low cohesion. Neutralization of the graft copolymer provides it with very high hydrophilicity, thereby increasing the dissolution and spreading of the graft chains into water. When a pigment is dispersed using the graft copolymer, the graft chains exhibit good compatibility with water so that the dispersion stability of the particles of the pigment is improved. On the other hand, the backbone of the graft copolymer has high compatibility with the pigment so that the backbone adsorbs on the particles of the pigment to provide a pigment dispersion with very good dispersing effects for the pigment. The pigment dispersion, therefore, has high dispersion stability. The addition of the graft copolymer to paints, inks, coating compositions, adhesives or stationery makes it possible to obtain good products.

## Claims

1. An ink-jet ink comprising a pigment dispersion comprising an inorganic pigment or organic pigment dispersed in an aqueous medium while using as a dispersant a graft copolymer or emulsion,
wherein the graft copolymer is formed by copolymerization of (A) a macromonomer and (B) a monomer, wherein
(i) said macromonomer (A) is a polymer of (a) an ester monomer between an addition-polymerizable, unsaturated carboxylic acid and an aliphatic alcohol and (b) an addition-polymerizable monomer having an acidic group, said polymer containing an addition-polymerizable group at an end thereof and having an acid value of from 100 to 300;
(ii) said monomer (B) is an addition-polymerizable monomer;
(iii) units of said macromonomer (A) amount to from 20 to 50 wt.% of the whole graft copolymer, and units of said monomer (B) amount to from 50 to 80 wt.% of the whole graft copolymer, wherein, when a total amount of said monomer (B) is assumed to be 100 wt.%, said monomer (B) comprises at least (c) from 30 to 99.5 wt.% of a hydrophobic monomer comprising styrene and (b) from 0.5 to 20 wt.% of a monomer having an acidic group, wherein said monomer (b), which has said acidic group, is at least one monomer selected from the group consisting of acrylic acid, methacrylic acid, crotonic acid, maleic acid, fumaric acid, itaconic acid, mono(2-methacroyloxyethyl) phthalate, mono(2-methacroyloxyethyl) succinate, vinylsulfonic acid, styrenesulfonic acid, (meth)acrylamidodimethylpropane-sulfonic acid, 2-(meth)acroyloxyethylsulfonic acid and mono(2-methacroyloxyethyl) acid phosphate;
(iv) a backbone formed of said monomer (B) has an acid value of from 3 to 130 and an entire acid value of said graft copolymer, including an acid value derived from said macromonomer, is from 55 to 170; and
wherein the emulsion is obtainable by a method comprising subjecting a monomer, which is composed primarily of a hydrophobic monomer, to emulsion polymerization in the presence of the graft copolymer.

2. The ink-jet ink according to claim 1, wherein said macromonomer has a number average molecular weight of from 1,000 to 30,000 and contains no aromatic ring.

3. The ink-jet ink according to claim 1, wherein said acidic group is a carboxyl group, a sulfonic group and/or a phosphoric group.

4. The ink-jet ink according to claim 1, wherein said ester monomer (a) is an ester between at least one monomer selected from the group consisting of acrylic acid, methacrylic acid, crotonic acid, maleic acid, fumaric acid and itaconic acid and a C₁₋₃₀ aliphatic alcohol or C₆₋₃₀ alicyclic alcohol.

5. The ink-jet ink according to claim 1, wherein acidic groups have been neutralized with an alkaline substance.

## Patentansprüche

1. Tintenstrahldruckertinte, umfassend eine Pigmentdispersion, die ein anorganisches Pigment oder organisches Pigment umfaßt, das unter Verwendung eines Propfcopolymeren als Dispergiermittel oder einer Emulsion in einem wässrigen Medium dispergiert ist,
wobei das Propfcopolymer durch Copolymerisation von (A) einem Makromonomer und (B) einem Monomer gebildet wird, wobei
(i) das Makromonomer (A) ein Polymer aus (a) einem Estermonomer aus einer additionspolymerisierbaren ungesättigten Carbonsäure und einem aliphatischen Alkohol und (b) einem additionspolymerisierbaren Monomer mit einer sauren Gruppe ist, sowie eine additionspolymerisierbare Gruppe an einem Ende davon und einen Säurewert von 100 bis 300 aufweist;
(ii) Das Monomer (B) ein additionspolymerisierbares Monomer ist;
(iii) Einheiten des Makromonomers (A) 20 bis 50 Gewichts-% des gesamten Propfcopolymeren ausmachen und Einheiten des Monomers (B) 50 bis 80 Gewichts-% des gesamten Propfcopolymeren ausmachen, wobei dann, wenn eine Gesamtmenge des Monomers (B) als 100 Gewichts-% angenommen wird, das Monomer (B) mindestens (c) 30 bis 99,5 Gewichts-% eines hydrophoben Monomers, umfassend Styrol und (b) 0,5 bis 20 Gewichts-% eines Monomers mit einer sauren Gruppe umfasst, wobei das Monomer (b), das die saure Gruppe aufweist, mindestens ein Monomer ist, das ausgewählt wird aus der Gruppe, bestehend aus Acrylsäure, Methacrylsäure, Crotonsäure, Maleinsäure, Fumarsäure, Itaconsäure, Mono(2-methacryloxyethyl)phthalat, Mono(2-methacryloxyethyl)succinat, Vinylsulfonsäure, Styrolsulfonsäure, (Meth)acrylamidodimethylpropan-Sulfonsäure, 2-(Meth)acryloxyethylsulfonsäure und Mono(2-methacryloxyethyl)säurephosphat;
(iv) ein Gerüst, das aus dem Monomer (B) aufgebaut ist, einen Säurewert von 3 bis 130 aufweist und ein Gesamtsäurewert des Propfcopolymers, einschließlich einem Säurewert, der von dem Makromonomer abgeleitet wird, bei 55 bis 170 liegt; und
wobei die Emulsion durch ein Verfahren erhältlich ist, umfassend eine Emulsionspolymerisation in Gegenwart des Propfcopolymers von Monomeren, die primär aus hydrophobem Monomer aufgebaut sind.

2. Tintenstrahldruckertinte nach Anspruch 1, wobei das Makromonomer ein Molekulargewichtszahlenmittel von 1.000 bis 30.000 aufweist und einen aromatischen Ring enthält.

3. Die Tintenstrahldruckertinte nach Anspruch 1, wobei die Säuregruppe eine Carboxylgruppe, eine Sulfonsäuregruppe und/oder eine Phosphorsäuregruppe ist.

4. Die Tintenstrahldruckertinte nach Anspruch 1, wobei das Estermonomer (a) ein Ester zwischen mindestens einem Monomer, ausgewählt aus der Gruppe, bestehend aus Acrylsäure, Methacrylsäure, Crotonsäure, Maleinsäure, Fumarsäure und Itaconsäure und einem C₁₋₃₀ aliphatischen Alkohol oder C₆₋₃₀ alizyklischen Alkohol, ist.

5. Die Tintensrahldruckertinte nach Anspurch 1, wobei die sauren Gruppen mit einer alkalischen Substanz neutralisiert wurden.

## Revendications

1. Encre pour jet d'encre comprenant une dispersion de pigment comprenant un pigment inorganique ou un pigment organique dispersé dans un milieu aqueux tout en utilisant, en tant que dispersant, un copolymère greffé ou une émulsion,
dans laquelle le copolymère greffé est formé par copolymérisation de (A) un macromonomère et (B) un monomère, où
(i) ledit macromonomère (A) est un polymère de (a) un monomère ester d'un acide carboxylique insaturé polymérisable par addition et d'un alcool aliphatique et (b) un monomère polymérisable par addition comportant un groupe acide, ledit polymère contenant un groupe polymérisable par addition à une extrémité de celui-ci et présentant un indice d'acide de 100 à 300 ;
(ii) ledit monomère (B) est un monomère polymérisable par addition ;
(iii) les motifs dudit macromonomère (A) représentent de 20 à 50 % en poids du copolymère greffé total, et les motifs dudit monomère (B) représentent de 50 à 80 % en poids du copolymère greffé total, et, quand la quantité totale dudit monomère (B) est supposée être de 100 % en poids, ledit monomère (B) comprend au moins (c) de 30 à 99,5 % en poids d'un monomère hydrophobe comprenant du styrène et (b) de 0,5 à 20 % en poids d'un monomère comportant un groupe acide, ledit monomère (b), qui comporte ledit groupe acide, étant au moins un monomère choisi dans l'ensemble constitué par l'acide acrylique, l'acide méthacrylique, l'acide crotonique, l'acide maléique, l'acide fumarique, l'acide itaconique, le phtalate de mono(2-méthacroyloxy-éthyle), le succinate de mono(2-méthacroyloxyéthyle), l'acide vinylsulfonique, l'acide styrènesulfonique, l'acide (méth)acrylamidodiméthylpropanesulfonique, l'acide 2-(méth)acroyloxyéthylsulfonique et le phosphate d'acide mono(2-méthacroyloxyéthylique) ;
(iv) une charpente formée dudit monomère (B) présente un indice d'acide de 3 à 130, et l'indice d'acide total dudit copolymère greffé, y compris l'indice d'acide dérivé dudit macromonomère, est de 55 à 170 ; et
dans laquelle l'émulsion peut être obtenue par un procédé consistant à soumettre un monomère, qui est composé principalement d'un monomère hydrophile, à une polymérisation en émulsion en présence du copolymère greffé.

2. Encre pour jet d'encre selon la revendication 1, dans laquelle ledit macromonomère présente une masse moléculaire moyenne en nombre de 1 000 à 30 000 et ne contient pas de cycle aromatique.

3. Encre pour jet d'encre selon la revendication 1, dans laquelle ledit groupe acide est un groupe carboxyle, un groupe sulfonique et/ou un groupe phosphorique.

4. Encre pour jet d'encre selon la revendication 1, dans laquelle ledit monomère ester (a) est un ester d'au moins un monomère choisi dans l'ensemble constitué par l'acide acrylique, l'acide méthacrylique, l'acide crotonique, l'acide maléique, l'acide fumarique et l'acide itaconique, et d'un alcool aliphatique en C₁ à C₃₀ ou d'un alcool alicyclique en C₆ à C₃₀.

5. Encre pour jet d'encre selon la revendication 1, dans laquelle lesdits groupes acides ont été neutralisés avec une substance alcaline.
